(19) Europäisches Patentamt / European Patent Office / Office européen des brevets

(11) **EP 3 143 385 B1**

(12) **EUROPEAN PATENT SPECIFICATION**

(45) Date of publication and mention of the grant of the patent:
**09.12.2020 Bulletin 2020/50**

(21) Application number: **15722712.5**

(22) Date of filing: **12.05.2015**

(51) Int Cl.:
**G01N 23/223** (2006.01)   **G01N 33/487** (2006.01)

(86) International application number:
**PCT/EP2015/060437**

(87) International publication number:
**WO 2015/173220 (19.11.2015 Gazette 2015/46)**

(54) **METHOD FOR MONITORING A PRODUCT PROPERTY OF A DISPOSABLE DIAGNOSTIC TEST PRODUCT**

VERFAHREN ZUR ÜBERWACHUNG EINER PRODUKTEIGENSCHAFT EINES WEGWERFBAREN DIAGNOSTISCHEN TESTPRODUKTS

PROCÉDÉ POUR SURVEILLER UNE PROPRIÉTÉ D'UN PRODUIT DE TEST DE DIAGNOSTIC JETABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2014 EP 14168251**

(43) Date of publication of application:
**22.03.2017 Bulletin 2017/12**

(73) Proprietors:
• **Roche Diabetes Care GmbH**
  **68305 Mannheim (DE)**
  Designated Contracting States:
  **DE**
• **F. Hoffmann-La Roche AG**
  **4070 Basel (CH)**
  Designated Contracting States:
  **AL AT BE BG CH CY CZ DK EE ES FI FR GB GR HR HU IE IS IT LI LT LU LV MC MK MT NL NO PL PT RO RS SE SI SK SM TR**

(72) Inventors:
• **STEPHAN, Peter**
  **68549 Ilvesheim (DE)**

• **FINK, Herbert**
  **68259 Mannheim (DE)**
• **NIEDERMAIER, Stefan**
  **68526 Ladenburg (DE)**

(74) Representative: **Pfiz, Thomas et al**
  **Pfiz/Gauss Patentanwälte PartmbB**
  **Tübinger Strasse 26**
  **70178 Stuttgart (DE)**

(56) References cited:
**WO-A1-2009/033089**   **WO-A2-01/84129**
**WO-A2-2007/041639**   **WO-A2-2007/120552**
**US-A- 4 162 528**   **US-A- 5 657 363**
**US-A- 6 036 919**   **US-A1- 2003 106 809**

• **VRIELINK J A M ET AL: "Applicability of X-ray fluorescence spectroscopy as method to determine thickness and composition of stacks of metal thin films: A comparison with imaging and profilometry", THIN SOLID FILMS, ELSEVIER-SEQUOIA S.A. LAUSANNE, CH, vol. 520, no. 6, 15 August 2011 (2011-08-15), pages 1740-1744, XP028444228, ISSN: 0040-6090, DOI: 10.1016/J.TSF.2011.08.049 [retrieved on 2011-08-22]**

**Description**

The invention concerns a method for producing a disposable diagnostic test product and monitoring a product property of the test product according to independent claim 1.

It is known to produce diagnostic test elements by coating of a carrier foil with a bilayer test material structure, which is sequentially coated with a doctor knife as an aqueous suspension. In this context, it is also known in practice to monitor a layer in the wet state by means of an infrared spectrometer. Only afterwards, the drying of the coating is carried out. However, infrared spectrometry only registers the water content of the coating and not the proportion of functional ingredients. Moreover, only a relative signal is achieved in this way in order to evaluate the homogeneity of the measured layer within a production batch. A measurement on the final dry product (test disposable) is not possible in such a way.

In the field of semiconductor wafer fabrication, it is known from US 5,657,363 to use radioisotopic X-ray fluorescence in order to investigate thin metal films on a semiconductor substrate. The documents WO 2007/041639 A2, US 4 162 528 A and WO 01/84129 A2 are also concerned with X-ray fluorescence methods and systems for determining thicknesses of thin films WO 2007/120552 concerns the determination of lead in surface or buried layers of otherwise non-metallic constituents in test-strips.

On this basis the object of the invention is to further improve the known methods and systems for producing layered test elements including areal coating determination and to provide improved quality control for both the production and final measurement process.

The combination of features stated in the independent claim 1 proposed to achieve this object. Advantageous embodiments and further developments of the invention are derived from the dependent claims.

The invention is based on the idea of using a functional test component of a layered structure as an XRF sensitive reference for a coating quantity. According to the invention it is proposed that the production of a disposable diagnostic test product, specifically of blood glucose test strips or tapes includes a method for monitoring a product property or quality which comprises the steps of

- depositing on a substrate, preferably a carrier foil, a first layer of test material including a first metallic component and a second layer of test material covering the first layer and including a second metallic component,
- detecting X-ray fluorescence (XRF) signals of the metallic components in the composite of the first and second layer using XRF spectrometry,
- determining a value for the quantity of each metallic component in a measured area from the XRF signals,
- calculating the areal coating quantity or surface weight of the first and second layer using the quantity values of the metallic components.

In this way, it is possible to conduct a quantitative analysis of the quality and specifically the surface weight of a continuous bilayer structure of a sandwich-like test compound in a contactless measurement without impairing the product and without the need for specific preparation of samples. The measurement is fast and provides a result without further key components which are not functional for the intended diagnostic test.

According to the present invention, predetermined values of the proportion of the metallic components in the formulation of the test materials are used for calculating the absolute value of the surface area weight of the first and second layer.

In order to specifically distinguish both layers, it is beneficial when at least one of the first and second metallic components is provided in only one of the first and second layer.

A further improvement provides that the XRF signals are detected through the substrate, such that an XRF source and an XRF detector are oriented towards the uncoated side of the substrate. In this way, the sensitive test coatings are well-protected during the measurement process, and contamination of the instrument is avoided as well.

It is also conceivable that the XRF signals are taken in a single measurement on both layers, thus avoiding adjustment or collimation problems.

Another advantageous embodiment provides that the XRF signals are calibrated by comparative measurements on comparison elements including known amounts of the first or second metallic component. Thereby, a quantification of fundamental parameters of the individual coating components, e.g. absorption coefficients, is obsolete.

Advantageously, a comparison element for the first layer is formed by a thin foil positioned on the substrate and containing the first metallic component. It is also favorable that a comparison element for the second layer is formed by a thin foil containing the second metallic component and positioned on the first layer which in turn is provided on the substrate.

An investigation of a multilayer arrangement is simplified when the quantity value of each metallic component is determined as a peak value of the XRF signals at a characteristic energy in the XRF spectrum.

In order to reduce the expenditure in manufacturing, it is beneficial when at least one of the metallic components is provided in a functional constituent, specifically a dye, which is reactive to an analyte when conducting the diagnostic test.

A further improvement specifically for glucose test materials provides that the metallic components comprise at least one metallic element of the group: Ti, Mo, Rb, Y, Zr, Hf.

For further quality improvement of the production process, it is particularly advantageous when the layers are deposited in a coating process, and when a process parameter is adjusted in accordance with the areal coating quantity or surface weight of at least one of the layers.

Preferably, the test materials are applied as a wet chemistry composition, and XRF signals are detected on the dried chemistry composition in order to determine a dry surface area weight of the first and second layer.

Another embodiment involves the step of determining a batch specific code from the XRF signals, wherein the code allows to obtain or adjust a test result from a measurement reading of a test conducted with the diagnostic test product.

The invention is further elucidated in the following on the basis of an embodiment example shown schematically in the drawings, where

Fig. 1          is a schematic view of a measuring arrangement comprising an XRF coating analyzer and a layered test element;

Fig. 2          is an XRF spectrum plotted with the analyzer of fig. 1;

Fig. 3 and 4    show a sectional view of calibration elements for use in the EXR analyzer.

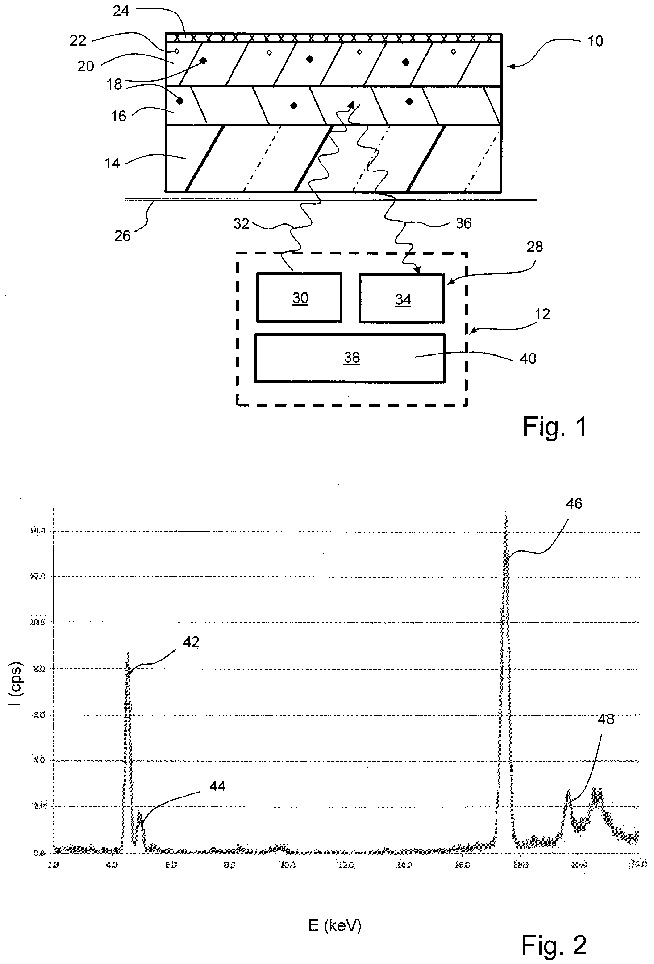

The measuring arrangement shown in fig. 1 is operable to monitor an areal coating quantity of a multi-layered disposable diagnostic test element 10 by means of an X-Ray Fluorescence (XRF-) analyzer 12.

The test element 10 is generally designed and produced as a two-layered composite on a substrate for detection of an analyte in a body fluid. Such test elements 10 may be provided as intermediate products for application on final goods, or may be already finished strip- or tape-like disposables.

The substrate is formed by a transparent plastic carrier 14, e.g. a 125 $\mu$m thick polycarbonate foil for application as a test strip or a 20 $\mu$m thick polyester foil for application in a test tape.

In the production process, the plastic carrier 14 is coated with a first layer 16 of a reactive test material. This material contains enzymes and some of mediator and dye. The latter reacts by a color change induced by enzymes which are responsive to an analyte, specifically glucose. The dye in the first layer 16 includes a first metallic component 18 which can be also used for product quality monitoring by XRF spectroscopy, as outlined below in more detail. In one exemplary composition, oxidase- or dehydrogenase enzymes are used, e.g. glucose oxidase or glucose dehydrogenase, and the dye includes molybdenum in the form of phosphomolybdic acid.

In a subsequent step during production, the first layer 16 is covered by a second layer 20 of test material containing most of the mediator and of the dye which are also present in the first layer. Further, the second layer 20 contains white pigments for separation of a blood sample and for providing a white background for optical measurement. The white pigments include a second metallic component 22, namely titanium in the form of titanium oxide. Thus, the second metallic component 22 (Ti) is only present in the second layer 20, whereas the first metallic component 18 (Mo) is present in both layers 16, 20.

Then, on the upper side of the test element 10, a spreading web 24 is attached for homogenous and planar distribution of a blood sample. When conducting a diagnostic test, the blood sample is applied by the user as a droplet from a skin wound.

In the manufacturing process, the first and second layers 16, 20 are successively deposited as a wet chemistry composition and dried. The wet test material may be applied with a doctor blade coater or squeegee, and drying of the suspension may occur while transporting a web-like substrate 14 from roll to roll. It is immediately apparent that the test sensitivity is dependent on the homogeneity and specifically the surface area weight (g/cm$^2$) of the dry layers 16, 20. For monitoring this product property or quality, the XRF analyzer 12 can be employed, as described below. The monitoring allows quality control in the manufacturing process and adjusting the test evaluation.

As illustrated in fig. 1 the analyzer 12 co-operates with receiving means 26, on which the test element 10 is supported at its bottom side of the substrate 14, thereby avoiding direct contact with the test material. The receiving means 26 may be designed as a table or as a measuring chamber which shields the vicinity against X-rays.

The analyzer 12 includes an XRF spectrometer 28 configured for detecting XRF signals of the metallic components 18, 22 in the first and second layer 16, 20. For this purpose, the spectrometer 28 comprises a source 30 for short-wavelenght X-rays 32 and a detector 34 for fluorescent radiation 36 emitted from excited (metallic) ingredients of the test element 10. Such XRF spectrometers are available as portable device, e.g. the instrument Niton XL3t Air from Thermo Fisher Scientific, Inc.

In order to evaluate the measurement signals, an electronic processor 38 is operable to determine a value for the quantity of each metallic component 18, 22 in a measured area. The processor 38 includes a program routine or software 40 for calculating the areal coating quantity (surface weight) of the first and second layer 16, 20.

Fig. 2 shows an XRF spectrum obtained from a test element 10, with the intensity (counts per second, cps) plotted over the energy. The spectrum comprises four distinct peaks, which occur at characteristic energies for each metallic element (e.g. Ti: K$\alpha$-line 42 and K$\beta$-line 44; Mo: K$\alpha$-line 46 and K$\beta$-line 48). The peak height allows determining the present quantity of the respective metallic element - provided that a valid calibration has been developed in this application.

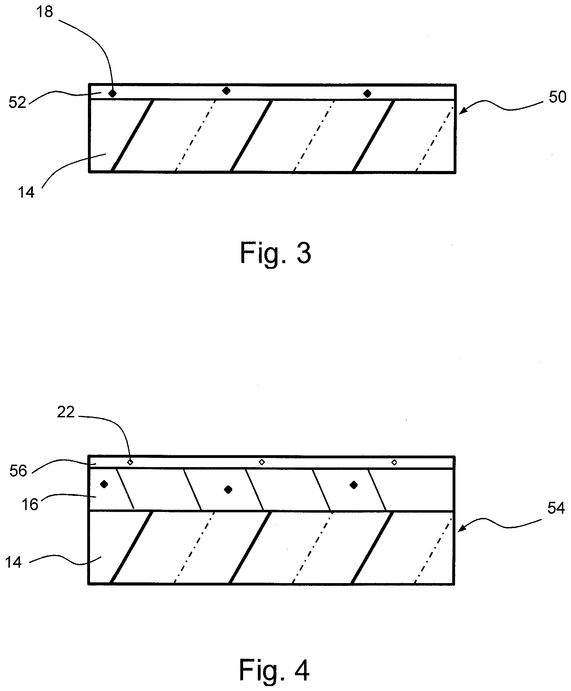

For such purposes, calibration elements which include known amounts of metallic components can be employed. Fig. 3 shows a first calibration element 50 for comparative measurements which comprises the plastic carrier 14 and a thin metal foil 52 made of the first metallic component 18. The foil 52 has an appropriate thickness (i.e. an optimized surface area weight) matched to the expected measurement signal of the test material. For example, a molybdenum foil of 0.1 $\mu$m thickness may be used. As shown in Fig. 4, a calibration element 54 is utilized as a reference for the metallic component 22 in the second layer 20. It comprises the carrier foil 14, the first layer 16 and a metal foil 56 made of the second metallic component 22. For example, a titanium foil of 3 $\mu$m thickness may be used. As titanium is a comparatively lighter element, its XRF signal is weakened through the first layer 16, and such attenuation is taken into account by use of the calibration element 54 including the layer structure described above. Furthermore, when measuring the calibration elements 50, 54, the spectrometer 28 scans the same surface area as in the measurement on a test element 10.

The calibration allows to determine the quantity value of each metallic component from the peak value of the XRF signals at the characteristic energy in the XRF spectrum. As explained above, the XRF signals are taken in a single measurement on both layers 16, 20 of a test element 10. Then, the quantification of the surface area weight of the layers 16, 20 is done with the known formulation of the wet coating mass. As the second metallic component 22 (Ti) is only present in the second layer 20, the measured metallic quantity is directly related to the surface area weight of the second layer 20 via the predetermined proportion value in the formulation. By further computation, the surface area weight of the first layer 16 is determined from the quantity value and the known formulation of the first metallic component 18 (Mo), taking into account the calculated thickness of the second layer 20. Such calculation of the individual dry surface area weight of the first layer and second layer from the XRF reading obtained from a single measurement is exemplified in the following

**Example 1:**

An XRF measurement of a fully coated two-layered dry sample (coated foil or test strip) produces a reading for the element Ti of 23 cps/$\mu$A and for the element Mo of 50 cps/$\mu$A.

The dry surface area weight of titanium and of molybdenum can be calculated, using the predetermined linear calibration function that was obtained as described above with the Ti-foil and the Mo-foil. This gives a dry surface area weight of 4.81 g/m$^2$ Ti and of 0.71 g/m$^2$ Mo.

The mass fraction of titanium in titanium dioxide and of molybdenum in molybdic acid is known from the stoichiometric composition of these compounds and from reference measurements on the raw materials employed. With this mass fraction and stoichiometry, the dry surface area weight of titanium dioxide and of molybdic acid can be calculated from the dry surface area weight of titanium and molybdenum, respectively. This gives a dry surface area weight of 8.02 g/m$^2$ titanium dioxide and of 1.36 g/m$^2$ molybdic acid.

As titanium dioxide is only present in the second layer, the dry surface area weight of the second layer can now be determined using the dry surface area weight of titanium dioxide. This is done by using the mass fraction of titanium dioxide in the dry coating mass of the second layer, known from the recipe of the coating formulation. This gives a dry surface area weight of the second layer of 13.4 g/m$^2$.

The mass fraction of molybdic acid in the dry second layer is also known from the recipe of the coating formulation. Thus, the dry surface area weight of molybdic acid in the second layer can now be calculated with the dry surface area weight of the second layer and said mass fraction of molybdic acid in the dry second layer. This gives a dry surface area weight of 1.03 g/m$^2$ molybdic acid in the second layer.

This dry surface area weight of molybdic acid in the second layer is now subtracted from the total amount (surface area weight) of molybdic acid present in the two-layered coated sample, to give the dry surface area weight of molybdic acid in the first layer. This gives a dry surface area weight of (1.36 g/m$^2$ - 1.03 g/m$^2$) = 0.33 g/m$^2$ molybdic acid in the first layer.

The mass fraction of molybdic acid in the dry first layer is known from the recipe of the coating formulation of the first layer. Said mass fraction can now be used to calculate the dry surface area weight of the first layer. This gives a dry surface area weight of the first layer of 12.18 g/m$^2$.

As clearly illustrated by way of this example, the dry surface area weight of the first layer and of the second layer are both calculated from the XRF values obtained in a single measurement of the two-layered coated sample.

It is also envisaged to adjust the coating process during production of test elements 10 by aid of XRF measurements. For this, samples of test elements 10 can be taken, and process parameters of the coating process, for example the width of a doctor blade gap, can be adjusted in accordance with the areal coating quantity determined on the samples.

Another application contemplates using the XRF for determining a batch specific code which is useful when obtaining diagnostic test results signals from measurement readings of a test conducted with the test element 10. Generally, such a code is a mathematical relation between measurement signals, i.e. a remission value in case of photometrical measurements, and the concentration of the analyte (glucose) in the body fluid sample. The remission values are taken at a defined wavelength over a determined time interval. In this context, it is known to provide an empirical code on the basis of reference measurements taken on prepared blood samples with specimen of test elements from a batch. Herein, multivariate generalized linear models may be applied. For example, such a code may be given as a functional relation

$$\text{conc}(x) = a + b{*}x + c{*}x^2 + d{*}x^e + f{*}\exp(x^g) \tag{1}$$

wherein a,b,c,d,e,f,g are variables determined from the reference measurements, x is the remission and conc is the glucose concentration. Such a code is stored in the glucose meter, e.g. via a batch specific code chip.

When using the XRF monitoring, the reference measurements can be omitted, and the batch specific code is rather calculated from the XRF data, i.e. from the dry areal coating quantity of the functional components Mo and Ti.

In the following, exemplary details are given for code optimization using the XRF values:
In the described application of diagnostic test strips for glucose measurement, a defined mathematical relation can be established between the code function of different batches and the dry surface area weight of the functional components titanium dioxide and molybdic acid in the coating layer of these batches (and the test strips produced with these batches).

The dry surface area weight of titanium dioxide and molybdic acid is preferably measured by the XRF method as described. This allows to use the code function of a defined batch (e.g. master batch) and the surface area weight values of titanium dioxide and molybdic acid of an arbitrary batch to calculate the code function for said arbitrary batch and also to directly calculate the results (glucose concentration) from measurements performed with strips of said arbitrary batch.

**Example 2:**

An example of the calculation of the results for measurements with strips of an arbitrary batch is given below:

$$\text{conc}(x) = u + v{*}\text{conc}(y), \tag{2}$$

where conc(x) is the glucose concentration measured with test strips of an arbitrary batch, u and v are variables determined with samples from said arbitrary batch (see below), and conc(y) is the glucose concentration obtained from the remission measurement of the arbitrary batch (as described above), but with the code of the master batch.

The variables u and v can be calculated exemplarily with the equations

$$u = m + n{*}(\text{TiO}_2)^p + o{*}(\text{MoA}) \tag{3}$$

$$v = r + s{*}(\text{TiO}_2)^w + t{*}(\text{MoA}), \tag{4}$$

where $(\text{TiO}_2)$ is the dry surface area weight of titanium dioxide in the two-layered coating of test strips of the arbitrary batch, (MoA) is the dry surface area weight of molybdic acid in the two-layered coating of test strips of the arbitrary batch, and m, n, o, p,
r, s, t, w are variables determined empirically from several production batches.

In this way the coding process of new batches can be replaced by XRF measurements of the dry surface area weight of the functional components titanium dioxide and molybdic acid.

With this procedure, the parameters used for the calculation of the diagnostic result (glucose concentration) are directly derived from the individual test strip used in the measurement. Consequently, the accuracy of the result is significantly improved.

**Claims**

1. A method for producing a disposable diagnostic test product and monitoring a product property of the test product (10), specifically for blood glucose test strips or tapes, comprising

   a) depositing on a substrate (14), preferably a carrier foil, a first layer (16) of test material including a first metallic component (18) and a second layer (20) of test material covering the first layer (16) and including a second metallic component (22),
   b) detecting XRF signals of the metallic components (18,22) in the composite of the first and second layer (16,20) using XRF spectrometry,
   c) determining a value for the quantity of each metallic component (18,22) in a measured area from the XRF signals,
   d) calculating the areal coating quantity of the first and second layer (16,20) using the quantity values of the metallic components (18,22) and predetermined values of the proportion of the metallic components (18,22) in the test materials.

2. The method of claim 1, wherein at least one of the first and second metallic components (18,22) is provided in only one of the first and second layer (16,20).

3. The method of claim 1 or 2, wherein the XRF signals are detected through the substrate (14), such that an XRF source and an XRF detector are oriented towards the uncoated side of the substrate (14).

4. The method according to any of claims 1 to 3, wherein the XRF signals are taken in a single measurement on both layers (16,20).

5. The method according to any of claims 1 to 4, further comprising calibrating the XRF signals by comparative measurements on comparison elements (50,54) including known amounts of the first or second metallic component (22).

6. The method according to claim 5, wherein a comparison element (50) for the first layer (16) is formed by a thin foil (52) positioned on the substrate (14) and containing the first metallic component (18).

7. The method according to claim 5 or 6, wherein a comparison element (54) for the second layer (20) is formed by a thin foil (56) containing the second metallic component (22) and positioned on the first layer (16) which in turn is provided on the substrate (14).

8. The method according to any of claims 1 to 7, wherein the quantity value of each metallic component (18,22) is determined as a peak value of the XRF signals at a characteristic energy in the XRF spectrum.

9. The method according to any of claims 1 to 8, wherein at least one of the metallic components (18,22) is provided in a functional constituent, specifically a dye, which is reactive to an analyte when conducting the diagnostic test.

10. The method according to any of claims 1 to 9, wherein the metallic components (18,22) comprise an element of the group: Ti, Mo, Rb, Y, Zr, Hf.

11. The method according to any of claims 1 to 10, wherein the layers (16,20) are deposited in a coating process, and wherein a process parameter is adjusted in accordance with the areal coating quantity of at least one of the layers (16,20).

12. The method according to any of claims 1 to 11, further comprising applying the test materials as a wet chemistry composition, and detecting XRF signals on the dried chemistry composition in order to determine a dry surface area weight of the first and second layer (16,20).

13. The method according to any of claims 1 to 12, further comprising determining a batch specific code from the XRF signals, wherein the code allows to obtain a test result from a measurement reading of a test conducted with the diagnostic test product (10).

**EP 3 143 385 B1**

**Patentansprüche**

1. Verfahren zur Herstellung eines diagnostischen Einweg-Testproduktes und zur Überwachung einer Produkteigenschaft des Testproduktes (10), insbesondere für Blutzucker-Teststreifen oder -bänder, umfassend

   a) Aufbringen auf einem Substrat (14), vorzugsweise einer Trägerfolie, einer eine erste metallische Komponente (18) enthaltenden ersten Schicht (16) aus Testmaterial und einer die erste Schicht (16) bedeckenden und eine zweite metallische Komponente (22) enthaltenden zweiten Schicht (20) aus Testmaterial,
   b) Erfassen von XRF-Signalen der metallischen Komponenten (18, 22) in dem Verbund der ersten und zweiten Schicht (16, 20) mittels XRF-Spektrometrie,
   c) Bestimmen eines Wertes für die Menge jeder metallischen Komponente (18, 22) in einem gemessenen Bereich aus den XRF-Signalen,
   d) Berechnung der Flächenbeschichtungsmenge der ersten und zweiten Schicht (16, 20) unter Verwendung der Mengenwerte der metallischen Komponenten (18, 22) und vorbestimmter Werte des Anteils der metallischen Komponenten (18, 22) in den Testmaterialien.

2. Verfahren nach Anspruch 1, wobei mindestens eine der ersten und zweiten metallischen Komponenten (18, 22) in nur einer der ersten und zweiten Schicht (16, 20) vorgesehen ist.

3. Verfahren nach Anspruch 1 oder 2, wobei die XRF-Signale durch das Substrat (14) hindurch detektiert werden, so dass eine XRF-Quelle und ein XRF-Detektor auf die unbeschichtete Seite des Substrats (14) ausgerichtet sind.

4. Verfahren nach einem der Ansprüche 1 bis 3, bei dem die XRF-Signale in einer einzigen Messung an beiden Schichten (16, 20) gemessen werden.

5. Verfahren nach einem der Ansprüche 1 bis 4, weiterhin umfassend Kalibrieren der XRF-Signale durch Vergleichsmessungen an bekannte Mengen der ersten oder zweiten metallischen Komponente (22) enthaltenden Vergleichselementen (50, 54).

6. Verfahren nach Anspruch 5, wobei ein Vergleichselement (50) für die erste Schicht (16) durch eine dünne Folie (52) gebildet wird, die auf dem Substrat (14) angeordnet ist und die erste metallische Komponente (18) enthält.

7. Verfahren nach Anspruch 5 oder 6, wobei ein Vergleichselement (54) für die zweite Schicht (20) durch eine dünne Folie (56) gebildet wird, die die zweite metallische Komponente (22) enthält und auf der ersten Schicht (16) positioniert ist, die ihrerseits auf dem Substrat (14) bereitgestellt ist.

8. Verfahren nach einem der Ansprüche 1 bis 7, wobei der Mengenwert jeder metallischen Komponente (18, 22) als ein Höchstwert der XRF-Signale bei einer charakteristischen Energie im XRF-Spektrum bestimmt wird.

9. Verfahren nach einem der Ansprüche 1 bis 8, bei dem mindestens eine der metallischen Komponenten (18, 22) in einem funktionellen Bestandteil, insbesondere einem Farbstoff, bereitgestellt wird, der bei der Durchführung des diagnostischen Tests auf einen Analyten anspricht.

10. Verfahren nach einem der Ansprüche 1 bis 9, wobei die metallischen Komponenten (18, 22) ein Element der Gruppe umfassen: Ti, Mo, Rb, Y, Zr, Hf.

11. Verfahren nach einem der Ansprüche 1 bis 10, bei dem die Schichten (16, 20) in einem Beschichtungsverfahren aufgebracht werden und bei dem ein Verfahrensparameter in Übereinstimmung mit der Flächenbeschichtungsmenge mindestens einer der Schichten (16, 20) eingestellt wird.

12. Verfahren nach einem der Ansprüche 1 bis 11, ferner umfassend Aufbringen der Testmaterialien als nasschemische Zusammensetzung, und Erfassen von XRF-Signalen auf der getrockneten chemischen Zusammensetzung, um ein Trockenoberflächenflächengewicht der ersten und zweiten Schicht (16, 20) zu bestimmen.

13. Verfahren nach einem der Ansprüche 1 bis 12, ferner umfassend Bestimmung eines chargenspezifischen Codes aus den XRF-Signalen, wobei der Code es ermöglicht, ein Testergebnis aus einem Messwert eines mit dem diagnostischen Testprodukt (10) durchgeführten Tests zu erhalten.

7

**EP 3 143 385 B1**

**Revendications**

1.  Procédé de production d'un produit de test de diagnostic jetable et de surveillance d'une propriété de produit du produit de test (10), spécifiquement pour des bandelettes ou bandes de test de glucose dans le sang, comprenant

    a) déposer sur un substrat (14), de préférence une feuille de support, une première couche (16) de matériau de test comportant un premier composant métallique (18) et une deuxième couche (20) de matériau de test couvrant la première couche (16) et comportant un deuxième composant métallique (22),
    b) détecter des signaux XRF des composants métalliques (18, 22) dans le composite des première et deuxième couches (16, 20) en utilisant la spectrométrie XRF,
    c) déterminer une valeur pour la quantité de chaque composant métallique (18, 22) dans une zone mesurée à partir des signaux XRF,
    d) calculer la quantité de revêtement surfacique des première et deuxième couches (16, 20) en utilisant les valeurs de quantité des composants métalliques (18, 22) et des valeurs prédéterminées de la proportion des composants métalliques (18, 22) dans les matériaux de test.

2.  Procédé de la revendication 1, dans lequel au moins l'un des premier et deuxième composants métalliques (18, 22) est prévu dans une seule couche des première et deuxième couches (16, 20).

3.  Procédé de la revendication 1 ou 2, dans lequel les signaux XRF sont détectés à travers le substrat (14), de sorte qu'une source XRF et un détecteur XRF soient orientés vers le côté non revêtu du substrat (14).

4.  Procédé selon l'une des revendications 1 à 3, dans lequel les signaux XRF sont pris en une seule mesure sur les deux couches (16, 20).

5.  Procédé selon l'une des revendications 1 à 4, comprenant en outre l'étalonnage des signaux XRF par des mesures comparatives sur des éléments de comparaison (50, 54) comportant des quantités connues du premier ou du deuxième composant métallique (22).

6.  Procédé selon la revendication 5, dans lequel un élément de comparaison (50) pour la première couche (16) est formé par une feuille mince (52) positionnée sur le substrat (14) et contenant le premier composant métallique (18).

7.  Procédé selon la revendication 5 ou 6, dans lequel un élément de comparaison (54) pour la deuxième couche (20) est formé par une feuille mince (56) contenant le deuxième composant métallique (22) et positionnée sur la première couche (16) qui à son tour est prévue sur le substrat (14).

8.  Procédé selon l'une des revendications 1 à 7, dans lequel la valeur de quantité de chaque composant métallique (18, 22) est déterminée comme une valeur de crête des signaux XRF à une énergie caractéristique dans le spectre XRF.

9.  Procédé selon l'une des revendications 1 à 8, dans lequel au moins un des composants métalliques (18, 22) est fourni dans un constituant fonctionnel, spécifiquement un colorant, qui est réactif à un analyte lors de la réalisation du test de diagnostic.

10. Procédé selon l'une des revendications 1 à 9, dans lequel les composants métalliques (18, 22) comprennent un élément du groupe : Ti, Mo, Rb, Y, Zr, Hf.

11. Procédé selon l'une des revendications 1 à 10, dans lequel les couches (16, 20) sont déposées dans un procédé de revêtement, et dans lequel un paramètre de procédé est ajusté conformément à la quantité de revêtement surfacique d'au moins une des couches (16, 20).

12. Procédé selon l'une des revendications 1 à 11, comprenant en outre l'application des matériaux de test en tant que composition chimique humide, et la détection des signaux XRF sur la composition chimique séchée afin de déterminer un grammage sec des première et deuxième couches (16, 20).

13. Procédé selon l'une des revendications 1 à 12, comprenant en outre la détermination d'un code spécifique de lot à partir des signaux XRF, dans lequel le code permet d'obtenir un résultat de test à partir d'une lecture de mesure d'un test réalisé avec le produit de test de diagnostic (10).

Fig. 1

E (keV)

Fig. 2

Fig. 3

Fig. 4

**EP 3 143 385 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5657363 A
- WO 2007041639 A2
- US 4162528 A
- WO 0184129 A2
- WO 2007120552 A